# EUROPEAN PATENT SPECIFICATION

(11) **EP 3 032 514 B1**
(45) Date of publication and mention of the grant of the patent: **28.02.2018**
(21) Application number: 15199609.7
(22) Date of filing: 11.12.2015
(51) Int. Cl.: G08C 17/02

(54) **METHOD AND DEVICE FOR PERFORMING CONFIGURATION**
VERFAHREN UND VORRICHTUNG ZUR DURCHFÜHRUNG EINER KONFIGURATION
PROCÉDÉ ET DISPOSITIF SERVANT À EFFECTUER LA CONFIGURATION

(30) Priority: 12.12.2014 CN 201410771880
(43) Date of publication of application: 15.06.2016
(73) Proprietor: Xiaomi Inc., Beijing 100085 (CN)
(72) Inventor: WU, Ping, 100085 Haidian District (CN); LIANG, Xin, 100085 Haidian District (CN); LIU, Xin, 100085 Haidian District (CN); LIU, Bo, 100085 Haidian District (CN)
(74) Representative: Robson, Aidan John

(56) References cited:
- US-A1- 2006 153 156
- US-A1- 2014 226 817

## Description

### CROSS-REFERENCE TO RELATED APPLICATIONS

### TECHNICAL FIELD

The present disclosure generally relates to the technical field of communication between terminal devices, and more particularly, to a method and device for performing configuration of such devices.

### BACKGROUND

With the development of technology, it is expected to get rid of complex cables and cumbersome setting steps in configuration of a terminal device. Taking a smart television as an example, smart televisions are used in a large number of households nowadays. Compared with a conventional television, a smart television has more functions such as WIFI Internet access and downloading, etc. In addition to directly purchasing a smart television, a user may also purchase a smart TV box, which may serve as a smart television after being connected to a conventional television. A smart television needs configuring for achieving functions such as WIFI Internet access. In related art, a remote control unit may be used for configuring a smart television. For example, the remote control unit is configured to scan the currently available WIFI list, then a WIFI network to be connected is selected, finally WIFI passwords are inputted by means of the remote control unit, thus achieving wireless connection. This process can be time consuming for a user. Documents US2014/0226817 A1 and US2006/0153156 A1 disclose methods for configuring devices.

### SUMMARY

The present disclosure provides a configuration method and device.

According to a first aspect of the embodiments of the present disclosure, a method for performing configuration is provided, which is applied to a first terminal, including:
generating a WIFI frame, which includes configuration data for configuration of a second terminal; and
broadcasting the WIFI frame so that the second terminal may be configured according to the configuration data acquired by parsing the WIFI frame after receiving the WIFI frame.

Optionally, the step of generating a WIFI frame includes:
generating a WIFI frame before establishing a communication connection with the second terminal, and providing the configuration data in a predefined field of the WIFI frame, the WIFI frame including: a Management Frame, a Control Frame or a Data Frame.

Optionally, the configuration data includes: an SSID (Service Set Identifier) and a connection password;
the step of generating the WIFI frame and providing the configuration data in a predefined field of the WIFI frame includes:
acquiring SSIDs and connection passwords of networks saved in the first terminal and choosing an SSID and a connection password of a network for the configuration; and
writing the SSID and the connection password of the network chosen into the predefined field of a WIFI frame to generate the WIFI frame so that the second terminal may be connected with the network chosen according to the configuration data acquired by parsing the WIFI frame.

Optionally, the configuration data includes: an SSID, a connection password, a channel number and an encryption mode;
the step of generating the WIFI frame and providing the configuration data in a predefined field of the WIFI frame includes:
receiving an SSID, a connection password, a channel number and an encryption mode from a user; and
writing the SSID, the connection password, the channel number and the encryption mode inputted by the user into the predefined field of the WIFI frame to generate the WIFI frame so that the second terminal may create a wireless network according to the configuration data acquired by parsing the WIFI frame.

Optionally, when a number of bytes of the configuration data exceeds a preset length of the WIFI frame, the step of generating a WIFI frame includes:
partitioning the configuration data into at least two parts of data according to a preset rule; and
generating a plurality of the WIFI frames, each of which including a part of configuration data.

Optionally, the step of broadcasting the WIFI frame so that the second terminal may be configured according to the configuration data acquired by parsing the WIFI frame after receiving the WIFI frame includes:
successively broadcasting the plurality of the WIFI frames generated so that the second terminal may parse the WIFI frames received after receiving the plurality the WIFI frames, acquire the configuration data by combining the from respective WIFI frame according to the preset rule, and is configured according to the configuration data, the part of configuration data being acquired by parsing the respective WIFI frame.

According to a second aspect of the embodiments of the present disclosure, a method for performing configuration is provided, which is applied to a second terminal, including:
intercepting a WIFI frame sent by a first terminal, the WIFI frame including configuration data for configuration of the second terminal;
parsing the WIFI frame and acquiring the configuration data after intercepting the WIFI frame; and
performing configuration according to the configuration data.

Optionally, the step of parsing the WIFI frame and acquiring the configuration data after intercepting the WIFI frame includes:
parsing a predefined field of the WIFI frame and acquiring the configuration data after intercepting the WIFI frame.

Optionally,

The configuration data includes: an SSID and a connection password;
the step of performing configuration according to the configuration data includes: connecting with a corresponding network according to the SSID and the connection password;
or,
the configuration data includes: an SSID, a connection password, a channel number and an encryption mode; and the step of performing configuration according to the configuration data includes: creating a wireless network according to the SSID, the connection password, the channel number and the encryption mode.

Optionally, the step of parsing a predefined field of the WIFI frame and acquiring the configuration data after intercepting the WIFI frame includes:
judging whether there are a plurality of the WIFI frames intercepted; and
respectively parsing predefined fields of WIFI frames received and combining the part of data, acquired by parsing the predefined fields, according to the preset rule if there are the plurality of the WIFI frames intercepted, thus acquiring the configuration data.

According to a third aspect of the embodiments of the present disclosure, a device for performing configuration is provided, which is applied to a first terminal, including:
a generation module, configured to generate a WIFI frame, which includes configuration data for configuration of a second terminal; and
a broadcast module, configured to broadcast the WIFI frame so that the second terminal may be configured according to the configuration data acquired by parsing the WIFI frame after receiving the WIFI frame.

Optionally, the generation module is configured to:
generate the WIFI frame before establishing a communication connection with the second terminal and provide the configuration data in a predefined field of the WIFI frame, the WIFI frame includes: a Management Frame, a Control Frame or a Data Frame.

Optionally, the configuration data includes: an SSID and a connection password;
the generation module includes:
a first acquisition submodule for configuration data, configured to acquire SSIDs and connection passwords of networks saved in the first terminal and choose an SSID and a connection password of a network for the configuration; and
a first bearing submodule for configuration data, configured to write an SSID and a connection password of the network chosen into a predefined field of a WIFI frame to generate the WIFI frame so that the second terminal may be connected with the network chosen according to the configuration data acquired by parsing the WIFI frame.

Optionally, the configuration data includes: an SSID, a connection password, a channel number and an encryption mode;
the generation module includes:
a second acquisition submodule for configuration data, configured to receive an SSID, a connection password, a channel number and an encryption mode from a user; and
a second bearing submodule for configuration data, configured to write the SSID, the connection password, the channel number and the encryption mode inputted by the user into the predefined field of a WIFI frame to generate the WIFI frame so that the second terminal may create a wireless network according to the configuration data acquired by parsing the WIFI frame received.

Optionally, when a number of bytes of the configuration data exceeds a preset length of the WIFI frame, the generation module includes:
a data partitioning submodule, configured to partition the configuration data into at least two parts of data according to a preset rule; and
a multiframe generation submodule, configured to generate a plurality of the WIFI frames, each of which includes a part of configuration data.

Optionally, the broadcast module is configured to:
successively broadcast the plurality of the WIFI frames generated so that the second terminal may parse the WIFI frames received after receiving multiple the WIFI frames, acquire the configuration data by combining the part of configuration data from respective WIFI frame according to the preset rule, and may be configured according to the configuration data, the part of configuration data being acquired by parsing the respective WIFI frame.

According to a fourth aspect of the embodiments of the present disclosure, a device for performing configuration is provided, which is applied to a second terminal, including:
an interception module, configured to intercept a WIFI frame sent by a first terminal, which includes configuration data for configuration of the second terminal;
a parsing module, configured to parse the WIFI frame and acquire the configuration data after intercepting the WIFI frame; and
a configuration module, configured to perform configuration according to the configuration data.

Optionally, the parsing module is configured to:
parse a predefined field of the WIFI frame and acquire the configuration data after intercepting the WIFI frame.

Optionally,

The configuration data includes: an SSID and a connection password;
the configuration module is configured to connect with a corresponding network according to the SSID and the connection password;
or,
the configuration data includes: an SSID, a connection password, a channel number and an encryption mode;
the configuration module is configured to create a wireless network according to the SSID, the connection password, the channel number and the encryption mode.

Optionally, the parsing module includes:
a multiframe judgment submodule, configured to judge whether there are a plurality of the WIFI frames intercepted and notify a data combination submodule when there are the plurality of the WIFI frames intercepted;
the data combination submodule, configured to acquire the configuration data by respectively parsing predefined fields of WIFI frames received and combining each part of data, acquired by parsing the predefined fields, according to the preset rule.

According to a fifth aspect of the embodiments of the present disclosure, a configuration device is provided, including:
a processor; and
a memory configured to store instructions executable by the processor;
wherein, the processor is configured to:
   generate a WIFI frame, which includes configuration data for configuration of a second terminal; and
   broadcast the WIFI frame so that the second terminal may be configured according to the configuration data acquired by parsing the WIFI frame after receiving the WIFI frame.

According to a sixth aspect of the embodiments of the present disclosure, a device for performing configuration is provided, including:
a processor; and
a memory configured to store instructions executable by the processor;
wherein, the processor is configured to:
   intercept a WIFI frame sent by a first terminal, the WIFI frame includes configuration data for configuration of the device;
   parse the WIFI frame and acquire the configuration data after intercepting the WIFI frame; and
   perform a configuration according to the configuration data.

According to a seventh aspect of the embodiments of the present disclosure, there is provided a computer program, which when executing on a processor, performs a method according to the first to fourth aspects mentioned above.

The technical scheme according to embodiments of the disclosure may achieve the following beneficial effects.

In the embodiments of the present disclosure, no connection needs to be pre-established between the mobile terminal (taking a mobile phone as an example) and the second terminal (taking a smart television as an example). The mobile phone provides configuration data in a WIFI frame and then sends the configuration data out, the smart television initiates a data interception interface, and finishes its own configuration according to the configuration data received from the WIFI frame. For example, the mobile phone may provide an SSID and a password of a WIFI network in Probe Request so that the smart television may be connected with the WIFI access point using the SSID and the password. In this way, functions such as that a WIFI network acquired by the mobile phone is shared to the smart television may be efficiently achieved, dispensed with cumbersome configuration of the smart television and improving the operating efficiency in configuration of the terminal device.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for performing configuration according to an exemplary embodiment.
Fig. 2 is a flow chart showing a method for performing configuration according to an exemplary embodiment.
Fig. 3 is a schematic diagram showing a scenario for performing configuration of a smart television according to an exemplary embodiment.
Fig. 4 is a schematic diagram showing an operation interface according to an exemplary embodiment.
Fig. 5 is a flow chart showing a method for performing configuration according to an exemplary embodiment.
Fig. 6 is a schematic diagram showing a scenario for performing configuration of a smart television according to an exemplary embodiment.
Fig. 7 is a flow chart showing a method for performing configuration according to an exemplary embodiment.
Fig. 8 is a flow chart showing a method for performing configuration according to an exemplary embodiment.
Fig. 9 is a flow chart showing a method for performing configuration according to an exemplary embodiment.
Fig. 10 is a signaling diagram showing a method for performing configuration according to an exemplary embodiment.
Fig. 11 is a signaling diagram showing a method for performing configuration according to an exemplary embodiment.
Fig. 12 is a block diagram showing a device for performing configuration according to an exemplary embodiment.
Fig. 13 is a block diagram showing a device for performing configuration according to an exemplary embodiment.
Fig. 14 is a block diagram showing a device for performing configuration according to an exemplary embodiment.
Fig. 15 is a block diagram showing a device for performing configuration according to an exemplary embodiment.
Fig. 16 is a block diagram showing a device for performing configuration according to an exemplary embodiment.
Fig. 17 is a block diagram showing a device for performing configuration according to an exemplary embodiment.
Fig. 18 is a block diagram showing a device for performing configuration according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The embodiments of the present disclosure disclose a method for performing configuration, which is applicable to a first terminal, including:
generating a WIFI frame, which includes configuration data for configuration of a second terminal; and
broadcasting the WIFI frame so that the second terminal may be configured according to the configuration data acquired by parsing the WIFI frame after receiving the WIFI frame.

Optionally, the step of generating a WIFI frame includes:
generating the WIFI frame before establishing a communication connection with the second terminal and providing the configuration data in a predefined field of the WIFI frame, the WIFI frame including: a Management Frame, a Control Frame or a Data Frame.

Optionally, the configuration data includes: an SSID (Service Set Identifier) and a connection password;
the step of generating the WIFI frame and providing the configuration data in a predefined field of the WIFI frame includes:
acquiring SSIDs and connection passwords of networks saved in the first terminal and choosing an SSID and a connection password of a network for the configuration; and
writing the SSID and the connection password of the network chosen into the predefined field of the WIFI frame to generate the WIFI frame so that the second terminal may be connected with the network chosen according to the configuration data acquired by parsing the WIFI frame.

Optionally, the configuration data includes: an SSID, a connection password, a channel number and an encryption mode;
the step of generating the WIFI frame and providing the configuration data in a predefined field of the WIFI frame includes:
receiving an SSID, a connection password, a channel number and an encryption mode from a user; and
writing the SSID, the connection password, the channel number and the encryption mode inputted by the user into the predefined field of the WIFI frame to generate the WIFI frame so that the second terminal may create a wireless network according to the configuration data acquired by parsing the WIFI frame.

Optionally, when a number of bytes of the configuration data exceeds a preset length of the WIFI frame, the step of generating a WIFI frame includes:
partitioning the configuration data into at least two parts of data according to a preset rule; and
generating a plurality of the WIFI frames, each of which including a part of configuration data.

Optionally, the step of broadcasting the WIFI frame so that the second terminal may be configured according to the configuration data acquired by parsing the WIFI frame after receiving the WIFI frame includes:
successively broadcasting the plurality of the WIFI frames generated, so that the second terminal may parse the WIFI frames received after receiving the plurality of the WIFI frames, acquire the configuration data by combining the part of configuration data from respective WIFI frame according to the preset rule, the part of the configuration data being acquired by parsing the respective WIFI frame, and configure the second terminal according to the configuration data.

The embodiments of the present disclosure also disclose a method for performing configuration, which is applicable to a second terminal, including:
intercepting a WIFI frame sent by a first terminal, which includes configuration data for configuration of the second terminal;
parsing the WIFI frame and acquiring the configuration data after intercepting the WIFI frame; and
performing the configuration according to the configuration data.

Optionally, the step of parsing the WIFI frame and acquiring the configuration data after intercepting the WIFI frame includes:
parsing a predefined field of the WIFI frame and acquiring the configuration data after intercepting the WIFI frame.

Optionally,

The configuration data includes: an SSID and a connection password;
the step of performing the configuration according to the configuration data includes: connecting with corresponding networks according to the SSID and the connection password;
or,
the configuration data includes: an SSID, a connection password, a channel number and an encryption mode; and the step of performing the configuration according to the configuration data includes: creating a wireless network according to the SSID, the connection password, the channel number and the encryption mode.

Optionally, the step of parsing a predefined field of the WIFI frame and acquiring the configuration data after intercepting the WIFI frame includes:
judging whether there are a plurality of the WIFI frames intercepted; and
respectively parsing predefined fields of WIFI frames received and combining each part of data acquired by parsing the predefined fields according to a preset rule if there are the plurality of the WIFI frames intercepted, thus acquiring the configuration data.

The embodiments of the present disclosure also disclose a device for performing configuration, which is applicable to a first terminal, including:
a generation module, configured to generate a WIFI frame, which includes configuration data for configuration of a second terminal; and
a broadcast module, configured to broadcast the WIFI frame so that the second terminal may be configured according to the configuration data acquired by parsing the WIFI frame after receiving the WIFI frame.

Optionally, the generation module is configured to:
generate the WIFI frame before establishing a communication connection with the second terminal and provide the configuration data in a predefined field of the WIFI frame, the WIFI frame includes: a Management Frame, a Control Frame or a Data Frame.

Optionally, the configuration data includes: an SSID and a connection password;
the generation module includes:
a first acquisition submodule for configuration data, configured to acquire SSIDs and connection passwords of networks saved in the first terminal and choose an SSID and a connection password of a network for the configuration; and
a first bearing submodule for configuration data, configured to write the SSID and the connection password of the network chosen into a predefined field of the WIFI frame to generate the WIFI frame so that the second terminal may be connected with the network chosen according to the configuration data acquired by parsing the WIFI frame.

Optionally, the configuration data includes: an SSID, a connection password, a channel number and an encryption mode;
the generation module includes:
a second acquisition submodule for configuration data, configured to receive an SSID, a connection password, a channel number and an encryption mode from a user; and
a second bearing submodule for configuration data, configured to write the SSID, the connection password, the channel number and the encryption mode inputted by the user into the predefined field of the WIFI frame to generate the WIFI frame so that the second terminal may create a wireless network according to the configuration data acquired by parsing the WIFI frame received.

Optionally, when a number of bytes of the configuration data exceeds a preset length of the WIFI frame, the generation module includes:
a data partitioning submodule, configured to partition the configuration data into at least two parts of data according to a preset rule; and
a multiframe generation submodule, configured to generate a plurality of the WIFI frames, each of which includes a part of configuration data.

Optionally, the broadcast module is configured to:
successively broadcast the plurality of the WIFI frames generated so that the second terminal may parse the WIFI frames received, acquire the configuration data by combining the part of configuration data from respective WIFI frame according to the preset rule, the part of the configuration data being acquired by parsing the respective WIFI frame, and configure the second terminal according to the configuration data.

The embodiments of the present disclosure also disclose a device for performing configuration, which is applicable to a second terminal, including:
an interception module, configured to intercept a WIFI frame sent by a first terminal, the WIFI frame includes configuration data for configuration of the second terminal;
a parsing module, configured to parse the WIFI frame and acquire the configuration data after intercepting the WIFI frame; and
a configuration module, configured to perform the configuration according to the configuration data.

Optionally, the parsing module is configured to:
parse a predefined field of the WIFI frame and acquire the configuration data after intercepting the WIFI frame.

Optionally,

The configuration data includes: an SSID and a connection password;
the configuration module is configured to connect a corresponding network according to the SSID and the connection password;
or,
the configuration data includes: an SSID, a connection password, a channel number and an encryption mode;
the configuration module is configured to create a wireless network according to the SSID, the connection password, the channel number and the encryption mode.

Optionally, the parsing module includes:
a multiframe judgment submodule, configured to judge whether there are a plurality of the WIFI frames intercepted and notify a data combination submodule when there are the plurality of the WIFI frames intercepted;
the data combination submodule, configured to acquire the configuration data by combining a part of configuration data from respective WIFI frame according to a preset rule, the part of the configuration data being acquired by parsing the respective WIFI frame received.

The embodiments of the present disclosure also disclose a device for performing configuration, including:
a processor; and
a memory configured to store instructions executable by the processor;
wherein, the processor is configured to:
   generate a WIFI frame, which includes configuration data for configuration of a second terminal; and
   broadcast the WIFI frame so that the second terminal may be configured according to the configuration data acquired by parsing the WIFI frame after receiving the WIFI frame.

The embodiments of the present disclosure also disclose a device for performing configuration, including:
a processor; and
a memory configured to store instructions executable by the processor;
wherein, the processor is configured to:
   intercept a WIFI frame sent by a first terminal, the WIFI frame including configuration data for configuration of the second terminal;
   parse the WIFI frame and acquire the configuration data after intercepting the WIFI frame; and
   perform the configuration according to the configuration data.

The first terminal may include a mobile terminal such as a mobile phone, a tablet computer and the like, and the second terminal may include a smart television (including a smart TV box) or a smart sound box, etc. The WIFI frame may include a Data Frame, a Management Frame and a Control Frame, and a Probe Request belongs to one of the Management Frame. Further description of the solution of the present disclosure will be made by taking an example in which the WIFI frame is Probe Request, the predefined field is an SSID field, the first terminal is a mobile terminal such as a mobile phone and the second terminal is a smart television.

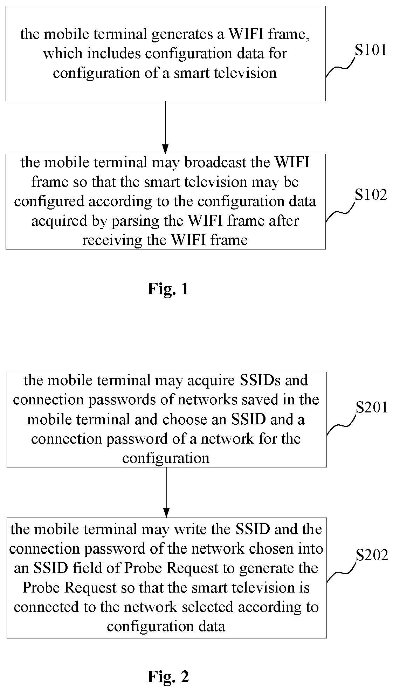

Fig. 1 is a flow chart showing a method for performing configuration according to an exemplary embodiment. The method may be applied to a mobile terminal such as a mobile phone, a tablet computer and the like. Referring to Fig. 1, the method may include following steps.

In Step S101, the mobile terminal generates a WIFI frame, which includes configuration data for configuration of the smart television.

When the user configures the smart television, for example, the smart television may be connected to a certain WIFI access point by configuring the smart television or the smart television itself serves as a WIFI access point, configuration data may be generated by the mobile phone for configuration of the smart television and then carried in the WIFI frame.

In Step S102, the mobile terminal may broadcast the WIFI frame so that the smart television may be configured according to the configuration data acquired by parsing the WIFI frame after receiving the WIFI frame.

In the present embodiment, no connection needs to be pre-established between the mobile terminal (such as a mobile phone and the like) and the smart television. Instead, the smart television opens a data interception interface and the mobile phone sends the WIFI frame out in a broadcast mode. After intercepting the WIFI frame, the smart television may extract configuration data therefrom and execute corresponding configuration operation, thus achieving functions of connecting to a certain WIFI access point or serving as a WIFI access point, etc.

The present embodiment does not limit a certain type, a structure and so on of the WIFI frame. As an example, the WIFI frame may be Probe Request in 802.11 protocol. The step of generating a WIFI frame may include:
generating a Probe Request before establishing a communication connection with the smart television, configuration data being placed in an SSID field of the Probe Request.

The Probe Request is configured to scan existing 802.11 networks in an area. The device may take the initiative to issue the Probe Request and wait for a Probe Response to an access point (AP), achieving discovery of the AP hereby. In the process of realizing the solution in the present disclosure, it is found that Probe Request may be employed to bear configuration data, hereby no connection needs to be pre-established between the mobile phone and the smart television, and the smart television only needs interception, thus further simplifying the operation process in configuration of the smart television.

The Probe Request includes an SSID field (SSID element content), which generally may be set as an SSID of a certain network or an SSID of any network, and has a maximum field length of 32 bytes. In the embodiments of the present disclosure, configuration data may be placed in the field.

In the present embodiment or other embodiments of the present disclosure, configuration data may include: an SSID and a connection password.

Correspondingly referring to Fig. 2, the step of generating a Probe Request may include:
In Step S201, the mobile terminal may acquire SSIDs and connection passwords of networks saved in the mobile terminal and choose an SSID and a connection password of a network for the configuration; and
In Step S202, the mobile terminal writes the SSID and the connection password of the network selected into the SSID field of Probe Request to generate the Probe Request so that the smart television may be connected with the network selected according to the configuration data.

Thus it is equivalent to a fact that information on WIFI access point is shared by the mobile phone with the smart television so that the smart television may be directly connected to the corresponding WIFI access point according to the SSID and the connection password received without necessity to configure the smart television by using the remote control unit.

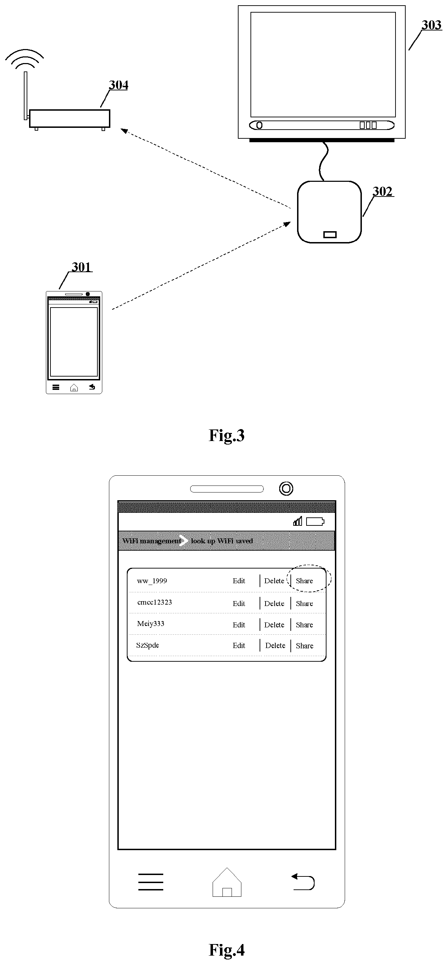

As an example of a scenario, please refer to Fig. 3, in which 301 stands for a mobile phone, 302 stands for a smart TV box (abbreviated as the TV box), 303 stands for the television, the TV box 302 and the television 303 jointly constitute a smart television, 304 stands for a certain WIFI access point (AP). The mobile phone 301 may send out both the SSID and the connection password of the AP 304, and the TV box 302 may be connected to the AP 304 after receiving both the SSID and the connection password.

In the interface as shown in Fig. 4, the user may look up SSIDs of the WIFI networks saved in the current mobile phone. Both the SSID and the connection password of the WIFI may be encapsulated by the mobile phone as a Probe Request and sent out to be shared with the smart television for use if the user clicks a "Share" button.

In the present embodiment or other embodiments of the present disclosure, the configuration data may also include: an SSID, a connection password, a channel number and an encryption mode.

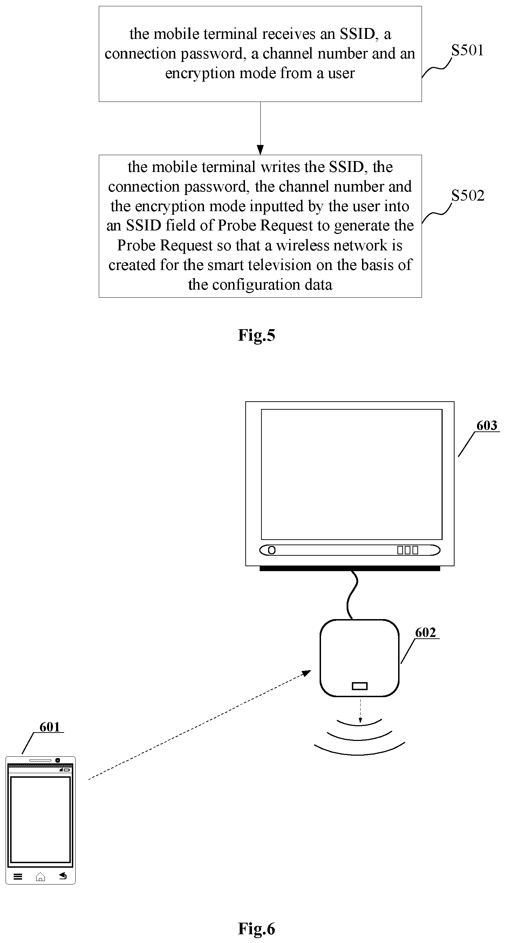

Correspondingly referring to Fig. 5, the step of generating a Probe Request may include following steps.

In Step S501, the mobile terminal receives a SSID, a connection password, a channel number and an encryption mode from a user; and
in Step S502, the mobile terminal writes the SSID, the connection password, the channel number and the encryption mode inputted by the user into the SSID field of the Probe Request to generate the Probe Request so that the smart television may create a wireless network according to the configuration data.

In this way, a wireless access point is created for the smart television by means of mobile phone instruction, without necessity to establish a connection with the smart television in advance or perfoming cumbersome operation on the remote control unit.

As an example, referring to Fig. 6, in which 601 stands for a mobile phone, 602 stands for a TV box, 603 stands for a television, the smart television is made up of the TV box 602 and the television 603; after the mobile phone 601 sends an SSID, a connection password, a channel number and an encryption mode to the TV box 602, the TV box 602 may establish a wireless access point by itself according to the configuration data. After the smart television per se turns into the wireless access point, the mobile phone may be connected to the smart television for data transmission.

Additionally, in some cases, a number of bytes of the configuration data may exceed a preset length of the WIFI frame. For example, some WIFI access points may have very long passwords, but the SSID field in Probe Request has only 32 bytes at most.

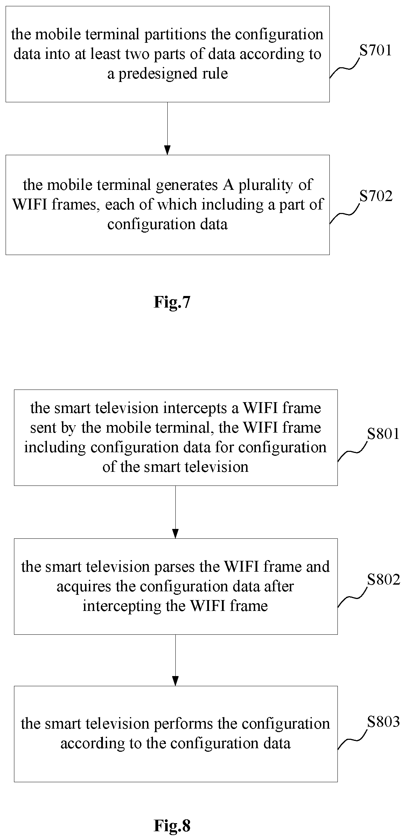

Referring to Fig. 7, in the present embodiment or other embodiments of the present disclosure, when the number of bytes of the configuration data exceeds the preset length of the WIFI frame, the step of generating a WIFI frame includes:

In Step S701, the mobile terminal partitions the configuration data into at least two parts of data according to a preset rule; and

In Step S702, the mobile terminal generates a plurality of WIFI frames, each of which includes a part of configuration data.

In the present embodiment or other embodiments of the present disclosure, the step of broadcasting the WIFI frame so that the smart television may be configured according to the configuration data acquired by parsing the WIFI frame after receiving the WIFI frame may include:
successively broadcasting the plurality of the WIFI frames generated so that the smart television may parse the WIFI frames received after receiving the plurality of the WIFI frames, acquire the configuration data by combining the part of configuration data from respective WIFI frame according to the preset rule, the part of configuration data being acquired by parsing the respective WIFI frame, and configure the smart television according to the configuration data.

For example, the configuration data may be equally partitioned into N parts according to the preset rule, and placed in N WIFI frames. And multiple indication signs may be set in each WIFI frame for indicating association relationships among data of respective parts. In this way, after the smart television receives one of the WIFI frames, it may be judged that which part of configuration data the data in the WIFI frame belongs to, and whether all WIFI frames of the configuration data are received.

Fig. 8 is a flow chart showing a method for performing configuration according to an exemplary embodiment. The method may be applied to a smart television. Referring to Fig. 8, the method may include following steps.

In Step S801, the smart television intercepts WIFI frames sent by a mobile terminal, which includes configuration data for configuration of the smart television.

In Step S802, after intercepting a WIFI frame, the smart television parses the WIFI frame and acquire the configuration data.

In Step S803, the smart television performs a configuration according to the configuration data.

In the present embodiment or other embodiments of the present disclosure, the WIFI frame may be a Probe Request in 802.11 protocol, and the configuration data may be placed in the SSID field of the Probe Request.

In the present embodiment or other embodiments of the present disclosure, the step of parsing the WIFI frame and acquiring the configuration data after intercepting the WIFI frame may include:
parsing the SSID field of the Probe Request and acquiring the configuration data after intercepting the Probe Request.

In the present embodiment or other embodiments of the present disclosure, the configuration data may include: an SSID and a connection password; and
the step of performing the configuration according to the configuration data includes: connecting a corresponding network according to the SSID and the connection password;
or,
the configuration data may include: an SSID, a connection password, a channel number and an encryption mode; and
the step of performing the configuration according to the configuration data includes: creating a wireless network according to the SSID, the connection password, the channel number and the encryption mode.

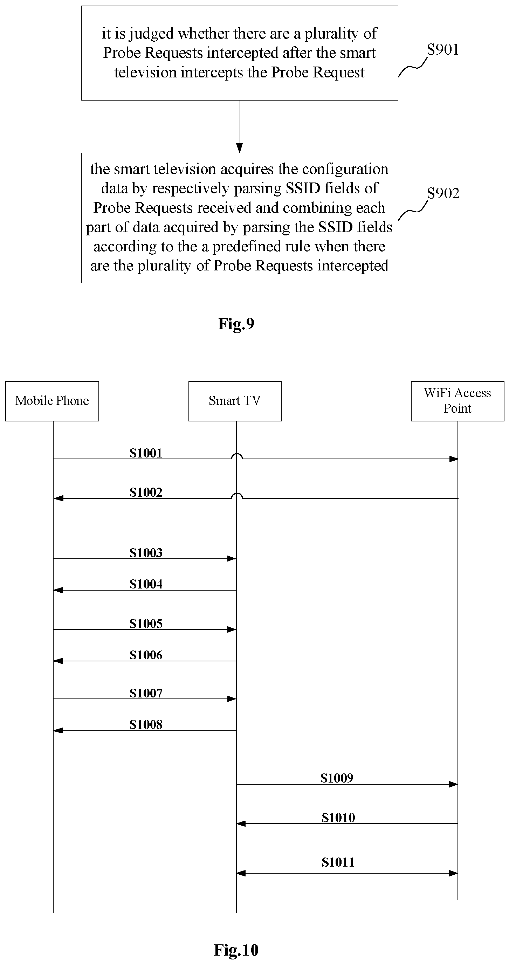

In addition, in the present embodiment or other embodiments of the present disclosure, when a number of bytes of the configuration data exceeds the preset length of the WIFI frame, the mobile terminal may partition the configuration data into at least two parts of data according to a preset rule, each part of which may be placed in a WIFI frame. Correspondingly, referring to Fig. 9, on the smart television side:
the step of parsing the SSID field of Probe Request and acquiring the configuration data after intercepting the Probe Request includes following steps.

In Step S901, it is judged whether there are a plurality of Probe Requests intercepted after the smart television intercepts Probe Request; and
In Step S902, the smart television acquires the configuration data by respectively parsing SSID fields of Probe Requests received and combining each part of data acquired by parsing the SSID fields according to a preset rule when there are the plurality of Probe Requests intercepted.

Further description of the present disclosure will be made in combination with two concrete scenarios.

Fig. 10 is a signaling diagram showing a method for performing configuration according to an exemplary embodiment. In the scenario of the present embodiment, the mobile terminal is a mobile phone, and the user needs to connect the smart television with a WIFI network (WIFI access point) by means of the mobile phone is. In addition, the configuration data is partitioned by the mobile phone into three frames of Probe Request and sent out due to a relatively large number of bytes of the configuration data.

In Step S1001, the mobile phone sends a connection request to the WIFI access point according to a connection password provided by the user.

In Step S1002, the WIFI access point sends feedback to the mobile phone, which signifies a successful connection.

Successful connection indicates the connection password of the WIFI access point is correct, and thus the connection password may be saved in the mobile phone for future use. Of course, the actual process of establishing the connection between the mobile phone and the WIFI access point may be more complex than Steps S1001∼S1002, for example, the connection may not succeed before several interactions. However, description of Steps S1001∼S1002 is a simplified description for easy understanding.

In Step S1003, the mobile phone sends out a first frame of Probe Request.

In Step SI004, the smart television feeds Probe Response back after receiving the first frame of Probe Request.

In Step S1005, the mobile phone sends out a second frame of Probe Request.

In Step SI006, the smart television feeds Probe Response back after receiving the second frame of Probe Request.

In Step S1007, the mobile phone sends out a third frame of Probe Request.

In Step S1008, the smart television feeds Probe Response back after receiving the third frame of Probe Request.

Specific contents of Probe Request are illustrated as below.

For example, the SSID of the AP to be connected is "mitv_24GAPABCD EFGHIJKLM" (23 bytes) and the connection password is "1234567890abcdefghi gklmnopqrs" (29 bytes), so the combination of the SSID and the connection password of the AP is "mitv_24GAPABCDEFGHIJKLM1234567890abcdefghigklmnopqrs" (52 bytes), which may be partitioned into three parts: "mitv_24GAPABCDEFGHIJKLM1" (24 bytes), "234567890abcdefghigklmnopq" (26 bytes) and "rs" (2 bytes). In addition, the configuration data also includes a data field (Ssid len) indicating a character length of the SSID of the AP, a data field (Password len) indicating a character length of the password, and a data field indicating a password type and an encryption Type, two bytes in total. Therefore, a total number of bytes (Total len) of the configuration data is 54 (Note: 1 byte=8 bits).

The SSID field of the first frame of Probe Request sent out by the mobile phone may be constituted as follows:

| Flag (4byte) | version (4bit) | Index (4bit) | Total len (1byte) | Ssid len (6bit) | Passwor d len (6bit) | Passwor d type (1bit) | key_ mgmt (3bit) | Sub Payload (24byte) |
|---|---|---|---|---|---|---|---|---|
| XMKL | 1 | 1 | 54 | 23 | 29 | 0 | 3:wpa | mitv_24 GAPAB CDEFG HIJKLM 1 |
| Plaintext | | | | Ciphertext | | | | |

The SSID field of the second frame of Probe Request sent out by the mobile phone may be constituted as follows:

| Flag (4byte) | version (4bit) | Index (4bit) | Total len (1byte) | Payload (26byte) |
|---|---|---|---|---|
| XMKL | 1 | 2 | 54 | 234567890abcdefghigklmnopq |
| Plaintext | | | | Ciphertext |

The SSID field of the third frame of Probe Request sent out by the mobile phone may be constituted as follows:

| Flag (4byte) | version (4bit) | Index (4bit) | Total len (1byte) | Payload (2byte) |
|---|---|---|---|---|
| XMKL | 1 | 3 | 54 | rs |
| Plaintext | | | | Ciphertext |

After the smart television receives the first frame, it is found that Total len=54 bytes. However, there are only 24 bytes in Sub Payload. Thus it is learned that the configuration data is partitioned, and it is also learned that the current frame is the first frame as Index=1. In addition, it is learned that the configuration data is configured to instruct the smart television to be connected to other APs as version=1.

After the smart television receives the second frame, it is learned that the current frame is the second frame as Index=2.

After the smart television receives the third frame, it is learned that the current frame is the third frame as Index=3.

After receiving three frames, a character string with 52 bytes may be acquired by means of accumulation of Sub Payload and two Payloads, which is exactly equal to Total len-2. Thus both the SSID and the password of the AP are received completely. Afterwards, both the SSID and the password of the AP may be acquired by partitioning the character string with 52 bytes according to the fact that Ssid len=23 and Password len=29.

In Step S1009, the smart television sends a connection request to the WIFI access point according to the SSID and the connection password received.

In Step S1010, the WIFI access point sends feedback to the smart television, which signifies a successful connection.

In Step S1011, Internet access is available for the smart television by means of the WIFI access point. For example, downloading movies and the like.

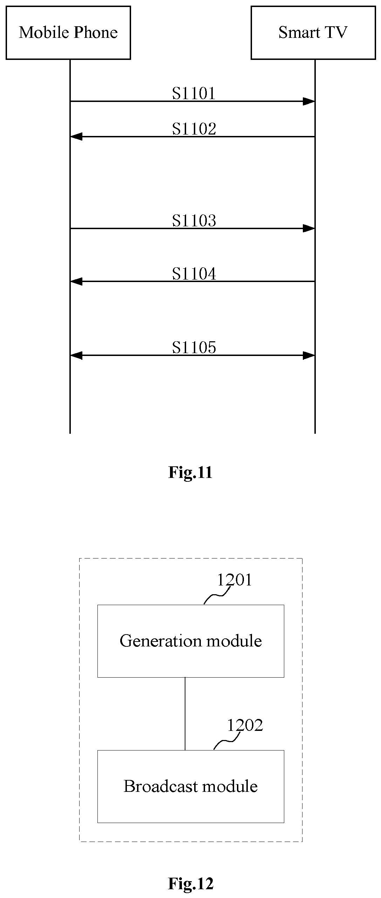

Fig. 11 is a signaling diagram showing a method for performing configuration according to an exemplary embodiment. In the scenario of the present embodiment, the mobile terminal is a mobile phone, and the user needs the smart television to create the WIFI network by means of the mobile phone, or in other words, the user wants to create the smart television as a WIFI access point by means of the mobile phone.

In Step S1101, the mobile phone sends out Probe Request which may be intercepted by the smart television.

In Step S1102, the smart television feeds Probe Response back.

Specific contents of Probe Request are illustrated as below.

For example, the SSID of the AP to be created by the smart television is "MIKLTVOS" (8 bytes), the connection password is "12345678" (8 bytes), the encryption mode is WPA, and the channel number is 6. The combination of the SSID and the password of the AP is "MIKLTVOS12345678" (16 bytes), not required for division due to a small number of bytes. In addition, a number of bytes of the encryption mode and the channel number and so on add up to 3. Therefore, a total number of bytes (Total len) of the configuration data is 19.

The SSID field of the Probe Request may be constituted as follows:

| Flag (4byte) | version (4bit) | Index (4bit) | Total len (1byte) | Ssid len (6bit) | Password len (6bit) | Password type (1bit) | key_ mgmt (3bit ) | channel (1byte) | Payload (16byte) |
|---|---|---|---|---|---|---|---|---|---|
| XMKL | 2 | 1 | 19 | 8 | 8 | 0 | 3:wpa | 6 | MIKLT VOS12 345678 |
| Plaintext | | | | Ciphertext | | | | | |

After the smart television receives the frame, it is learned that the configuration data is configured to instruct the smart television to be created as an AP as version=2. The character string "MIKLTVOS12345678" may be partitioned into the SSID and the password of the AP according to the fact that Ssid len=8 and Password len=8, and then the smart television may be created as the AP according to information on the channel, etc.

In Step S1103, the mobile phone sends a connection request to the smart television according to the connection password set previously.

In Step S1104, the smart television sends feedback to the mobile phone, which signifies a successful connection.

In Step S1105, data communication is available between the mobile phone and the smart television.

Fig. 12 is a block diagram showing a device for performing configuration according to an exemplary embodiment. The device may be applied to a mobile terminal. Referring to Fig. 12, the device includes:
a generation module 1201, configured to generate a WIFI frame, which includes configuration data for configuration of a smart television; and
a broadcast module 1202, configured to broadcast the WIFI frame so that the smart television may be configured according to the configuration data acquired by parsing the WIFI frame after receiving the WIFI frame.

In the present embodiment or other embodiments of the present disclosure, the generation module may be configured to:
generate Probe Request before establishing a communication connection with the smart television, and the configuration data may be placed in the SSID field of Probe Request.

In the present embodiment or other embodiments of the present disclosure, the configuration data may include: an SSID and a connection password.

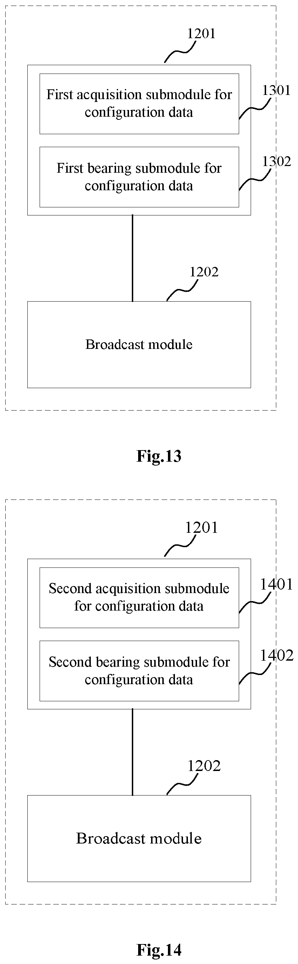

Correspondingly, referring to Fig. 13, the generation module includes:
a first acquisition submodule for configuration data 1301, configured to acquire SSIDs and connection passwords of networks saved in the mobile terminal and choose an SSID and a connection password of a network for the configuration; and
a first bearing submodule for configuration data 1302, configured to write the SSID and the connection password of the network selected into the SSID field of Probe Request to generate the Probe Request so that the smart television may be connected to the network selected according to the configuration data.

In the present embodiment or other embodiments of the present disclosure, the configuration data may include: an SSID, a connection password, a channel number and an encryption mode.

Correspondingly, referring to Fig. 14, the generation module includes:
a second acquisition submodule for configuration data 1401, configured to receive an SSID, a connection password, a channel number and an encryption mode from a user; and
a second bearing submodule for configuration data 1402, configured to write the SSID, the connection password, the channel number and the encryption mode inputted by the user into the SSID field of Probe Request to generate the Probe Request so that a wireless network may be created by the smart television according to the configuration data.

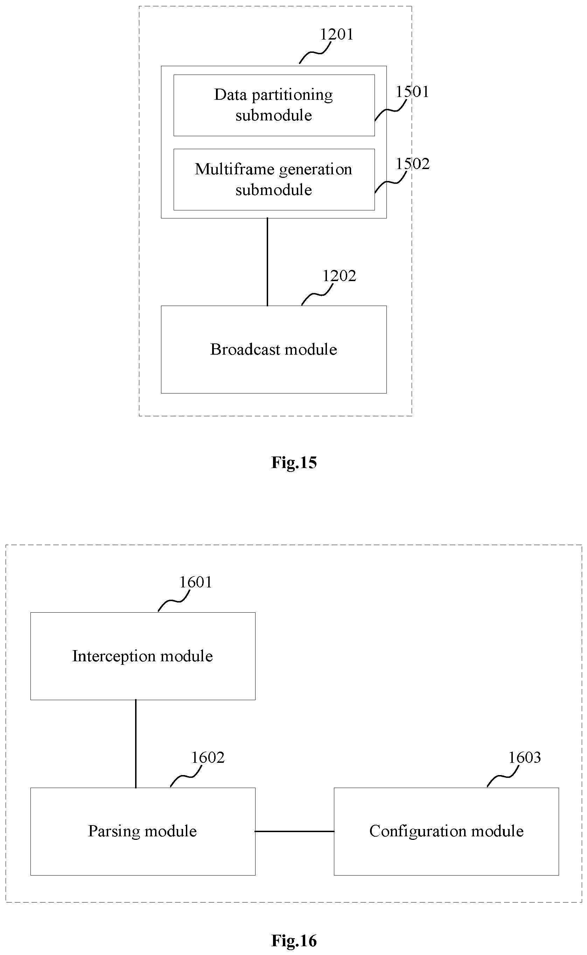

Referring to Fig. 15, in the present embodiment or other embodiments of the present disclosure, when a number of bytes of the configuration data exceeds a preset length of the WIFI frame, the generation module includes:
a data partitioning submodule 1501, configured to partition the configuration data into at least two parts of data according to a preset rule; and
a multiframe generation submodule 1502, configured to generate a plurality of the WIFI frames, each of which includes a part of configuration data.

In the present embodiment or other embodiments of the present disclosure, the WIFI frame broadcasting module may be specifically configured to:
successively broadcast the plurality of the WIFI frames generated so that the smart television may parse the WIFI frames received after receiving the WIFI frames, acquire the configuration data by combining the part of configuration data from respective WIFI frame according to the preset rule, the part of configuration being acquired by the respective WIFI frames, and configure the smart television according to the configuration data.

With regard to the device in the above embodiment, detailed description of specific modes for conducting operation of modules has been made in the embodiment related to the method, no detailed illustration will be made herein.

Fig. 16 is a block diagram showing a device for performing configuration according to an exemplary embodiment. The device may be applied to a smart television. Referring to Fig. 16, the device may include:
an interception module 1601, configured to intercept a WIFI frame sent by a mobile terminal, the WIFI frame includes configuration data for configuration of the smart television;
a parsing module 1602, configured to parse the WIFI frame and acquire the configuration data after intercepting the WIFI frame; and
a configuration module 1603, configured to conduct a configuration according to the configuration data.

In the present embodiment or other embodiments of the present disclosure, the WIFI frame may be Probe Request.

The parsing module is configured to:
parse the SSID field of Probe Request and acquire the configuration data after intercepting the Probe Request.

In the present embodiment or other embodiments of the present disclosure,
configuration data includes: an SSID and a connection password, and
the configuration module is configured to connect a corresponding network according to the SSID and the connection password;
or,
the configuration data includes: an SSID, a connection password, a channel number and an encryption mode; and
the configuration module is configured to create a wireless network according to the SSID, the connection password, the channel number and the encryption mode.

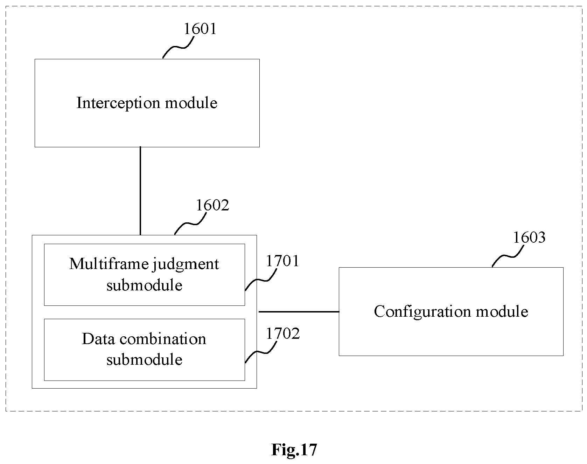

Referring to Fig. 17, in the present embodiment or other embodiments of the present disclosure, the parsing module includes:
a multiframe judgment submodule 1701, configured to judge whether there are multiple Probe Requests intercepted and notify a data combination submodule when there are the plurality of the Probe Requests intercepted; and
a data combination submodule 1702, configured to acquire configuration data by respectively parsing SSID fields of Probe Requests received and combining each part of data acquired by parsing the SSID fields according to a preset rule.

With regard to the device in the above embodiment, detailed description of specific modes for conducting operation of modules has been made in the embodiment related to the method, no detailed illustration will be made herein.

The present disclosure also discloses a device for performing configuration, including:
a processor; and
a memory configured to store instructions executable by the processor;

Wherein, the processor is configured to:
generate a WIFI frame, which includes configuration data for configuration of the smart television; and
broadcast the WIFI frame so that the smart television may be configured according to the configuration data acquired by parsing the WIFI frame after receiving the WIFI frame.

The present disclosure also discloses a non-transitory computer-readable storage medium, wherein instructions in the storage medium are executed by the processor of the mobile terminal so that the mobile terminal may execute a method for performing configuration, and the method includes:
generating a WIFI frame, which includes configuration data for configuration of the smart television; and
broadcasting the WIFI frame so that the smart television may be configured according to the configuration data acquired by parsing the WIFI frame after receiving the WIFI frame.

The present disclosure also discloses a device for performing configuration, including:
a processor; and
a memory configured to store instructions executable by the processor;

Wherein, the processor is configured to:
intercept a WIFI frame sent by the mobile terminal, the WIFI frame includes configuration data for configuration of the device;
parse the WIFI frame and acquire the configuration data after intercepting the WIFI frame; and
perform a configuration according to the configuration data.

The present disclosure also discloses a non-transitory computer-readable storage medium, wherein instructions in the storage medium are executed by the processor of the smart television so that the smart television may execute a method for performing configuration, and the method includes:
intercepting a WIFI frame sent by the mobile terminal, the WIFI frame including configuration data for configuration of the smart television;
parsing the WIFI frame and acquiring the configuration data after intercepting the WIFI frame; and
performing a configuration according to the configuration data.

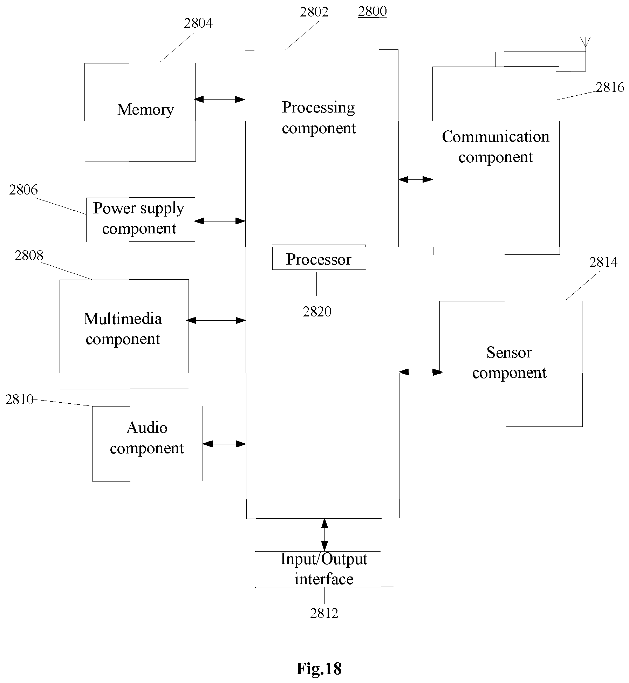

Fig. 18 is a block diagram showing a device for performing configuration according to an exemplary embodiment. For example, the device 2800 may be a mobile telephone, a computer, a digital broadcasting terminal, a message transceiver device, a games console, a tablet device, a medical device, a fitness facility, a PDA (personal digital assistant) and the like.

Referring to Fig. 18, the device 2800 may include one or more components as below: a processor component 2802, a memory 2804, a power supply component 2806, a multimedia component 2808, an audio component 2810, an input/output (I/O) interface 2812, a sensor component 2814 and a communication component 2816.

The processor module 2802 usually controls the overall operation of the device 2800, for example, display, telephone call, data communication, and operation associated with camera operation and record operation. The processor component 2802 may include one or multiple processors 2820 for executing instructions so as to complete steps of above method in part or in whole. In addition, the processor component 2802 may include one or multiple modules for the convenience of interaction between the processor component 2802 and other components. For example, the processor component 2802 may include a multimedia module for the convenience of interaction between the multimedia component 2808 and the processor component 2802.

The memory 2804 is configured to store data of different types so as to support the operation of the device 2800. Examples of the data include instructions of any application program or method, contact data, phonebook data, message, picture and video, etc., which are operated on the device 2800. The memory 2804 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 2806 provides power for components of the device 2800. The power supply component 2806 may include a power management system, one or multiple power supplies, and other components associated with generation, management and power distribution of the device 2800.

The multimedia component 2808 includes a screen between the device 2800 and a user and for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or multiple touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 2808 includes a front-facing camera and/or a rear-facing camera. When the device 2800 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 2810 is configured to output and/or input audio signal. For example, the audio component 2810 includes a microphone (MIC); when the device 2800 is under an operation mode such as call mode, record mode and speech recognition mode, the microphone is configured to receive external audio signal. The audio signal received may be further stored in the memory 2804 or sent out by the communication component 2816. In some embodiments, the audio component 2810 also includes a loudspeaker for outputting audio signal.

The I/O interface 2812 provides an interface for the processor component 2802 and a peripheral interface module, and the peripheral interface module may be a keyboard, a click wheel and buttons, etc. These buttons may include but not limited to: home button, volume button, start button and locking button.

The sensor component 2814 includes one or more sensors for providing the device 2800 with state evaluation from all aspects. For example, the sensor component 2814 may detect the on/off state of the device 2800, relative positioning of components, for example, the components are the displayer and keypads of the device 2800; the sensor component 2814 also may detect the position change of the device 2800 or a component thereof, the presence or absence of users' touch on the device 2800, the direction or acceleration/deceleration of the device 2800, and temperature variation of the device 2800. The sensor component 2814 may also include a proximity detector, which is configured to detect the presence of nearby objects in case of no physical touch. The sensor component 2814 may also include an optical sensor, for example, CMOS or CCD image sensor for imaging. In some embodiments, the sensor component 2814 may also include an acceleration sensor, a gyro sensor, a magnetic sensor, a pressure sensor, or a temperature sensor.

The communication component 2816 is configured to facilitate wired communication or wireless communication between the device 2800 and other equipment. The device 2800 is available for access to wireless network based on communication standards, for example, WIFI, 2G or 3G, or combination thereof. In an exemplary embodiment, the communication component 2816 receives by means of a broadcast channel the broadcast signal or broadcast-related information from external broadcast management systems. In an exemplary embodiment, the communication component 2816 also includes a near field communication (NFC) module for promoting short-range communication. For example, the NFC module may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 2800 may be realized by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic components, configured to execute the above method for the terminal side.

In exemplary embodiments, a non-transitory computer-readable storage medium including instructions is also provided, for example, a memory 2804 including instructions. Above instructions may be executed by the processors 2820 of the device 2800 so as to achieve the above method. For example, the non-transitory computer-readable storage medium may be ROM, random access memory (RAM), CD-ROM, magnetic tape, floppy disk and optical data storage device, etc.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for sending configuration data from a first terminal to a second terminal, comprising:
generating (S101) a WIFI frame containing configuration data for configuration of a second terminal; and
broadcasting (S102) the WIFI frame to enable the second terminal to be configured according to the configuration data acquired by parsing the WIFI frame received at the second terminal;
**characterized in that** the WIFI frame is the Probe Request frame in 802.11 Protocol, and
the configuration data is contained in the SSID field of the Probe Request frame.

2. The method of claim 1, wherein the generating a WIFI frame comprises:
generating the WIFI frame before establishing a communication connection with the second terminal, and providing the configuration data in a predefined field of the WIFI frame.

3. The method of claim 2, wherein the configuration data comprises: an SSID and a connection password;
the generating the WIFI frame and providing the configuration data in a predefined field of the WIFI frame comprises:
acquiring (S201) SSIDs and the connection passwords of networks saved in the first terminal and choosing an SSID and a connection password of a network for the configuration; and
generating the WIFI frame by writing (S202) the SSID and the connection password of the network chosen into the predefined field of the WIFI frame, so as to enable the second terminal to be connected with the network chosen according to the configuration data acquired by parsing the WIFI frame.

4. The method of claim 2, wherein the configuration data comprises: an SSID, a connection password, a channel number and an encryption mode;
the generating the WIFI frame and providing the configuration data in a predefined field of the WIFI frame comprises:
receiving (S501) an SSID, a connection password, a channel number and an encryption mode inputted from a user; and
generating the WIFI frame by writing (S502) the SSID, the connection password, the channel number and the encryption mode inputted from the user into the predefined field of the WIFI frame, so as to enable the second terminal to create a wireless network according to the configuration data acquired by parsing the WIFI frame received at the second terminal.

5. The method of claim 1, wherein the generating a WIFI frame comprises:
partitioning (S701) the configuration data, whose byte length exceeds a length of the predefined field of the WIFI frame, into at least two parts of data according to a preset rule; and
generating (S702) a plurality of the WIFI frames, each of which comprising a part of configuration data.

6. The method of claim 5, wherein the broadcasting the WIFI frame to enable the second terminal to be configured according to the configuration data acquired by parsing the WIFI frame received at the second terminal comprises:
successively broadcasting the plurality of the WIFI frames generated to enable the second terminal to be configured according to the configuration data acquired by combining the part of configuration data from respective WIFI frame according to the preset rule, the part of the configuration data being acquired by parsing the respective WIFI frame received at the second terminal.

7. A method for performing configuration, being at a second terminal in response to data received from a first terminal, comprising:
intercepting (S801) a WIFI frame sent from a first terminal, the WIFI frame containing configuration data for configuration of the second terminal;
acquiring (S802) the configuration data by parsing the WIFI frame intercepted; and
performing (S803) the configuration according to the configuration data;
**characterized in that** the WIFI frame is the Probe Request frame in 802.11 Protocol, and the configuration data is contained in the SSID field of the Probe Request frame.

8. The method of claim 7, wherein the acquiring the configuration data by parsing the WIFI frame intercepted comprises:
acquiring the configuration data by parsing a predefined field of the WIFI frame after intercepting the WIFI frame.

9. The method of claim 8, wherein
the configuration data comprises: an SSID and a connection password;
the performing the configuration according to the configuration data comprises: connecting with a corresponding network according to the SSID and the connection password;
or,
the configuration data comprises: an SSID, a connection password, a channel number and an encryption mode; and the performing the configuration according to the configuration data comprises: creating a wireless network according to the SSID, the connection password, the channel number and the encryption mode.

10. The method of claim 8, wherein the acquiring the configuration data by parsing a predefined field the WIFI frame intercepted comprises:
judging (S901) whether there are a plurality of the WIFI frames intercepted; and
acquiring (S902), if there are the plurality of the WIFI frames intercepted, the configuration data by combining a part of configuration data from respective WIFI frame according to a preset rule, the part of the configuration data being acquired by parsing the respective WIFI frame received.

11. A device for sending configuration data from a a first terminal to a second terminal, comprising:
a generation module (1201), configured to generate a WIFI frame containing configuration data for configuration of a second terminal; and
a broadcast module (1202), configured to broadcast the WIFI frame to enable the second terminal to be configured according to the configuration data acquired by parsing the WIFI frame received at the second terminal;
**characterized in that** the WIFI frame is the Probe Request frame in 802.11 protocol, and the configuration data is contained in the SSID field of the Probe Request frame.

12. The device of claim 11, wherein the generation module is configured to:
generate the WIFI frame before establishing a communication connection with the second terminal, and providing the configuration data in a predefined field of the WIFI frame.

13. The device of claim 12, wherein the configuration data comprises: an SSID and a connection password;
the generation module comprises:
a first acquisition submodule (1301) for configuration data, configured to acquire SSIDs and connection passwords of networks saved in the first terminal and choose an SSID and a connection password of a network for the configuration; and
a first bearing submodule (1302) for configuration data, configured to generate the WIFI frame by writing the SSID and the connection password of the network chosen into the predefined field of the WIFI frame to so as to enable the second terminal to be connected with the network chosen according to the configuration data acquired by parsing the WIFI frame.

14. The device of claim 12, wherein the configuration data comprises: an SSID, a connection password, a channel number and an encryption mode;
the generation module comprises:
a second acquisition submodule (1401) for configuration data, configured to receive an SSID, a connection password, a channel number and an encryption mode inputted from a user; and
a second bearing submodule (1402) for configuration data, configured to generate the WIFI frame by writing the SSID, the connection password, the channel number and the encryption mode inputted from the user into the predefined field of the WIFI frame, so as to enable the second terminal to create a wireless network according to the configuration data acquired by parsing the WIFI frame received at the second terminal.

15. A device for performing configuration at a second terminal in response to configuration data received from a first terminal, comprising:
an interception module (1601), configured to intercept a WIFI frame sent from a first terminal, the WIFI frame containing configuration data for configuration of the second terminal;
a parsing module (1602), configured to acquire the configuration data by parsing the WIFI frame intercepted;
a configuration module (1603), configured to perform the configuration according to the configuration data;
**characterized in that** the WIFI frame is the Probe Request frame in 802.11 Protocol, and
the configuration data is contained in the SSID field of the Probe Request frame.

16. A computer program comprising computer program code means which when executing on a processor, performs a method according to any one of claims 1 to 10.

## Patentansprüche

1. Verfahren zum Senden von Konfigurationsdaten von einem ersten Endgerät zu einem zweiten Endgerät, das Folgendes aufweist:
Erzeugen (S101) eines WIFI-Frames, der Konfigurationsdaten zur Konfiguration eines zweiten Endgeräts enthält; und
Ausstrahlen (S102) des WIFI-Frames, um das Konfigurieren des zweiten Endgeräts gemäß den durch Parsen des am zweiten Endgerät empfangenen WIFI-Frames erfassten Konfigurationsdaten zu ermöglichen;
**dadurch gekennzeichnet, dass** der WIFI-Frame der Probe-Request-Frame im 802.11-Protokoll ist und
die Konfigurationsdaten im SSID-Feld des Probe Request-Frames enthalten sind.

2. Verfahren nach Anspruch 1, wobei das Erzeugen eines WIFI-Frames Folgendes aufweist:
Erzeugen des WIFI-Frames vor Herstellen einer Kommunikationsverbindung mit dem zweiten Endgerät und Bereitstellen der Konfigurationsdaten in einem vordefinierten Feld des WIFI-Frames.

3. Verfahren nach Anspruch 2, wobei die Konfigurationsdaten Folgendes aufweisen: eine SSID und ein Verbindungspasswort;
das Erzeugen des WIFI-Frames und das Bereitstellen der Konfigurationsdaten in einem vordefinierten Feld des WIFI-Frames Folgendes aufweist:
Erfassen (S201) von SSID und den Verbindungspasswörtern von Netzwerken, die im ersten Endgerät gespeichert wurden, und Wählen einer SSID und eines Verbindungspassworts eines Netzwerks für die Konfiguration und
Erzeugen des WIFI-Frames durch Schreiben (S202) der SSID und des Verbindungspassworts des gewählten Netzwerks in das vordefinierte Feld des WIFI-Frames, um das Verbinden des zweiten Endgeräts mit dem gewählten Netzwerk gemäß den durch Parsen des WIFI-Frames erfassten Konfigurationsdaten zu ermöglichen.

4. Verfahren nach Anspruch 2, wobei die Konfigurationsdaten Folgendes aufweisen: eine SSID, ein Verbindungspasswort, eine Kanalnummer und einen Verschlüsselungsmodus;
das Erzeugen des WIFI-Frames und das Bereitstellen der Konfigurationsdaten in einem vordefinierten Feld des WIFI-Frames Folgendes aufweist:
Empfangen (S501) eines SSID, eines Verbindungspassworts, einer Kanalnummer und eines Verschlüsselungsmodus, die von einem Benutzer eingegeben wurden; und
Erzeugen des WIFI-Frames durch Schreiben (S502) der SSID, des Verbindungspassworts, der Kanalnummer und des Verschlüsselungsmodus, die vom Benutzer eingegeben wurden, in das vordefinierte Feld des WIFI-Frames, um dem zweiten Endgerät zum Erstellen eines drahtlosen Netzwerks gemäß den durch Parsen des am zweiten Endgerät empfangenen WIFI-Frames erfassten Konfigurationsdaten zu ermöglichen.

5. Verfahren nach Anspruch 1, wobei das Erzeugen eines WIFI-Frames Folgendes aufweist:
Partitionieren (S701) der Konfigurationsdaten, deren Bytelänge eine Länge des vordefinierten Felds des WIFI-Frames überschreitet, in wenigstens zwei Datenteile gemäß einer vorgegebenen Regel und
Erzeugen (S702) von mehreren der WIFI-Frames, die jeweils einen Konfigurationsdatenteil aufweisen.

6. Verfahren nach Anspruch 5, wobei das Ausstrahlen des WIFI-Frames zum Ermöglichen des Konfigurierens des zweiten Endgeräts gemäß den durch Parsen des am zweiten Endgerät empfangenen WIFI-Frames erfassten Konfigurationsdaten Folgendes aufweist:
aufeinanderfolgendes Ausstrahlen der mehreren WIFI-Frames, die erzeugt wurden, um das Konfigurieren des zweiten Endgeräts gemäß den durch Kombinieren des Konfigurationsdatenteils aus dem jeweiligen WIFI-Frame gemäß der vorgegebenen Regel erfassten Konfigurationsdaten zu ermöglichen, wobei der Konfigurationsdatenteil durch Parsen des jeweiligen am zweiten Endgerät empfangenen WIFI-Frames erfasst wird.

7. Verfahren zum Durchführen der Konfiguration an einem zweiten Endgerät als Reaktion auf von einem ersten Endgerät empfangene Daten, das Folgendes aufweist:
Abfangen (S801) eines von einem ersten Endgerät gesendeten WIFI-Frames, wobei der WIFI-Frame Konfigurationsdaten zur Konfiguration des zweiten Endgeräts enthält;
Erfassen (S802) der Konfigurationsdaten durch Parsen des abgefangenen WIFI-Frames und
Durchführen (S803) der Konfiguration gemäß den Konfigurationsdaten;
**dadurch gekennzeichnet, dass** der WIFI-Frame der Probe-Request-Frame im 802.11-Protokoll ist und
die Konfigurationsdaten im SSID-Feld des Probe Request-Frames enthalten sind.

8. Verfahren nach Anspruch 7, wobei das Erfassen der Konfigurationsdaten durch Parsen des abgefangenen WIFI-Frames Folgendes aufweist:
Erfassen der Konfigurationsdaten durch Parsen eines vordefinierten Felds des WIFI-Frames nach dem Abfangen des WIFI-Frames.

9. Verfahren nach Anspruch 8, wobei
die Konfigurationsdaten Folgendes aufweisen: eine SSID und ein Verbindungspasswort;
das Durchführen der Konfiguration gemäß den Konfigurationsdaten Folgendes aufweist: Verbinden mit einem entsprechenden Netzwerk gemäß den SSID und dem Verbindungspasswort; oder
die Konfigurationsdaten Folgendes aufweisen: eine SSID, ein Verbindungspasswort, eine Kanalnummer und einen Verschlüsselungsmodus; und das Durchführen der Konfiguration gemäß den Konfigurationsdaten Folgendes aufweist: Erstellen eines drahtlosen Netzwerks gemäß der SSID, dem Verbindungspasswort, der Kanalnummer und dem Verschlüsselungsmodus.

10. Verfahren nach Anspruch 8, wobei das Erfassen der Konfigurationsdaten durch Parsen eines vordefinierten Felds des abgefangenen WIFI-Frames Folgendes aufweist:
Urteilen (S901), ob es mehrere abgefangene WIFI-Frames gibt; und
Erfassen (S902), falls es die mehreren abgefangenen WIFI-Frames gibt, der Kombinationsdaten durch Kombinieren eines Konfigurationsdatenteils aus einem jeweiligen WIFI-Frame gemäß einer vorgegebenen Regel, wobei der Konfigurationsdatenteil durch Parsen des jeweiligen empfangenen WIFI-Frames erfasst wird.

11. Vorrichtung zum Senden von Konfigurationsdaten von einem ersten Endgerät zu einem zweiten Endgerät, die Folgendes aufweist:
ein Erzeugungsmodul (1201), das zum Erzeugen eines WIFI-Frames konfiguriert ist, der Konfigurationsdaten zur Konfiguration eines zweiten Endgeräts enthält; und
ein Ausstrahlungsmodul (1202), das zum Ausstrahlen des WIFI-Frames konfiguriert ist, um das Konfigurieren des zweiten Endgeräts gemäß den durch Parsen des am zweiten Endgerät empfangenen WIFI-Frames erfassten Konfigurationsdaten zu ermöglichen;
**dadurch gekennzeichnet, dass** der WIFI-Frame der Probe-Request-Frame im 802.11-Protokoll ist und die Konfigurationsdaten im SSID-Feld des Probe Request-Frames enthalten sind.

12. Vorrichtung nach Anspruch 11, wobei das Erzeugungsmodul konfiguriert ist zum:
Erzeugen des WIFI-Frames vor Herstellen einer Kommunikationsverbindung mit dem zweiten Endgerät und Bereitstellen der Konfigurationsdaten in einem vordefinierten Feld des WIFI-Frames.

13. Vorrichtung nach Anspruch 12, wobei die Konfigurationsdaten Folgendes aufweisen: eine SSID und ein Verbindungspasswort;
das Erzeugungsmodul Folgendes aufweist:
ein erstes Erfassungsuntermodul (1301) für Konfigurationsdaten, das zum Erfassen von SSID und Verbindungspasswörtern von Netzwerken, die im ersten Endgerät gespeichert wurden, und zum Wählen einer SSID und eines Verbindungspassworts eines Netzwerks für die Konfiguration konfiguriert ist; und
ein erstes Trägeruntermodul (1302) für Konfigurationsdaten, das zum Erzeugen des WIFI-Frames durch Schreiben der SSID und des Verbindungspassworts des gewählten Netzwerks in das vordefinierte Feld des WIFI-Frames, um das Verbinden des zweiten Endgeräts mit dem gewählten Netzwerk gemäß den durch Parsen des WIFI-Frames erfassten Konfigurationsdaten zu ermöglichen, konfiguriert ist.

14. Vorrichtung nach Anspruch 12, wobei die Konfigurationsdaten Folgendes aufweisen: eine SSID, ein Verbindungspasswort, eine Kanalnummer und einen Verschlüsselungsmodus;
das Erzeugungsmodul Folgendes aufweist:
ein zweites Erfassungsuntermodul (1401) für Konfigurationsdaten, das zum Empfangen eines SSID, eines Verbindungspassworts, einer Kanalnummer und eines Verschlüsselungsmodus, die von einem Benutzer eingegeben wurden, konfiguriert ist; und
ein zweites Trägeruntermodul (1402) für Konfigurationsdaten, das zum Erzeugen des WIFI-Frames durch Schreiben der SSID, des Verbindungspassworts, der Kanalnummer und des Verschlüsselungsmodus, die vom Benutzer eingegeben wurden, in das vordefinierte Feld des WIFI-Frames, um dem zweiten Endgerät zum Erstellen eines drahtlosen Netzwerks gemäß den durch Parsen des am zweiten Endgerät empfangenen WIFI-Frames erfassten Konfigurationsdaten zu ermöglichen.

15. Vorrichtung zum Durchführen einer Konfiguration an einem zweiten Endgerät als Reaktion auf von einem ersten Endgerät empfangene Daten, die Folgendes aufweist:
ein Abfangmodul (1601), das zum Abfangen eines von einem ersten Endgerät gesendeten WIFI-Frames konfiguriert ist, wobei der WIFI-Frame Konfigurationsdaten zur Konfiguration des zweiten Endgeräts enthält;
ein Parsermodul (1602), das zum Erfassen der Konfigurationsdaten durch Parsen des abgefangenen WIFI-Frames konfiguriert ist;
ein Konfigurationsmodul (1603), das zum Durchführen der Konfiguration gemäß den Konfigurationsdaten konfiguriert ist;
**dadurch gekennzeichnet, dass** der WIFI-Frame der Probe-Request-Frame im 802.11-Protokoll ist und
die Konfigurationsdaten im SSID-Feld des Probe Request-Frames enthalten sind.

16. Computerprogramm, das ein Computerprogrammcodemittel aufweist, das bei Abarbeiten in einem Prozessor ein Verfahren nach einem der Ansprüche 1 bis 10 durchführt.

## Revendications

1. Procédé d'envoi de données de configuration d'un premier terminal à un second terminal, comprenant :
la génération (S101) d'une trame WIFI contenant des données de configuration pour la configuration d'un second terminal ; et
la diffusion (S102) de la trame WIFI pour permettre la configuration du second terminal conformément aux données de configuration acquises en analysant syntaxiquement la trame WIFI reçue au niveau du second terminal ;
**caractérisé en ce que** la trame WIFI est la trame de demande de sondage dans le protocole 802.11, et les données de configuration sont contenues dans le champ SSID de la trame de demande de sondage.

2. Procédé selon la revendication 1, dans lequel la génération d'une trame WIFI comprend :
la génération de la trame WIFI avant d'établir une connexion de communication avec le second terminal, et la fourniture des données de configuration dans un champ prédéfini de la trame WIFI.

3. Procédé selon la revendication 2, dans lequel les données de configuration comprennent : un SSID et un mot de passe de connexion ;
la génération de la trame WIFI et la fourniture des données de configuration dans un champ prédéfini de la trame WIFI comprennent :
l'acquisition (S201) de SSID et des mots de passe de connexion de réseaux sauvegardés dans le premier terminal et le choix d'un SSID et d'un mot de passe de connexion d'un réseau pour la configuration ; et
la génération de la trame WIFI en écrivant (S202) le SSID et le mot de passe de connexion du réseau choisi dans le champ prédéfini de la trame WIFI, de manière à permettre la connexion du second terminal au réseau choisi conformément aux données de configuration acquises en analysant syntaxiquement la trame WIFI.

4. Procédé selon la revendication 2, dans lequel les données de configuration comprennent : un SSID, un mot de passe de connexion, un numéro de canal et un mode de cryptage ; la génération de la trame WIFI et la fourniture des données de configuration dans un champ prédéfini de la trame WIFI comprennent :
la réception (S501) d'un SSID, d'un mot de passe de connexion, d'un numéro de canal et d'un mode de cryptage entrés par un utilisateur ; et
la génération de la trame WIFI en écrivant (S502) le SSID, le mot de passe de connexion, le numéro de canal et le mode de cryptage entrés par l'utilisateur dans le champ prédéfini de la trame WIFI, de manière à permettre au second terminal de créer un réseau sans fil conformément aux données de configuration acquises en analysant syntaxiquement la trame WIFI reçue au niveau du second terminal.

5. Procédé selon la revendication 1, dans lequel la génération d'une trame WIFI comprend :
la division (S701) des données de configuration, dont la longueur d'octets dépasse une longueur du champ prédéfini de la trame WIFI, en au moins deux parties de données conformément à une règle prédéfinie ; et
la génération (S702) d'une pluralité de trames WIFI, qui comprennent chacune une partie de données de configuration.

6. Procédé selon la revendication 5, dans lequel la diffusion de la trame WIFI pour permettre la configuration du second terminal conformément aux données de configuration acquises en analysant syntaxiquement la trame WIFI reçue au niveau du second terminal comprend :
la diffusion successive de la pluralité de trames WIFI générées pour permettre la configuration du second terminal conformément aux données de configuration acquises en combinant la partie de données de configuration d'une trame WIFI respective conformément à la règle prédéfinie, la partie des données de configuration étant acquise en analysant syntaxiquement la trame WIFI respective reçue au niveau du second terminal.

7. Procédé d'exécution d'une configuration, au niveau d'un second terminal en réponse à des données reçues depuis un premier terminal, comprenant :
l'interception (S801) d'une trame WIFI envoyée par un premier terminal, la trame WIFI contenant des données de configuration pour la configuration du second terminal ;
l'acquisition (S802) des données de configuration en analysant syntaxiquement la trame WIFI interceptée ; et
l'exécution (S803) de la configuration conformément aux données de configuration ;
**caractérisé en ce que** la trame WIFI est la trame de demande de sondage dans le protocole 802.11, et les données de configuration sont contenues dans le champ SSID de la trame de demande de sondage.

8. Procédé selon la revendication 7, dans lequel l'acquisition des données de configuration en analysant syntaxiquement la trame WIFI interceptée comprend :
l'acquisition des données de configuration en analysant syntaxiquement un champ prédéfini de la trame WIFI après l'interception de la trame WIFI.

9. Procédé selon la revendication 8, dans lequel les données de configuration comprennent : un SSID et un mot de passe de connexion ;
l'exécution de la configuration conformément aux données de configuration comprend : la connexion avec un réseau correspondant conformément au SSID et au mot de passe de connexion ;
ou,
les données de configuration comprennent : un SSID, un mot de passe de connexion, un numéro de canal et un mode de cryptage ; et l'exécution de la configuration conformément aux données de configuration comprend : la création d'un réseau sans fil conformément au SSID, au mot de passe de connexion, au numéro de canal et au mode de cryptage.

10. Procédé selon la revendication 8, dans lequel l'acquisition des données de configuration en analysant syntaxiquement un champ prédéfini de la trame WIFI interceptée comprend :
le jugement (S901) qu'il existe ou non une pluralité de trames WIFI interceptées ; et
l'acquisition (S902), s'il existe une pluralité de trames WIFI interceptées, des données de configuration en combinant une partie de données de configuration d'une trame WIFI respective conformément à une règle prédéfinie, la partie des données de configuration étant acquise en analysant syntaxiquement la trame WIFI respective reçue.

11. Dispositif d'envoi de données de configuration d'un premier terminal à un second terminal, comprenant :
un module de génération (1201), configuré pour générer une trame WIFI contenant des données de configuration pour la configuration d'un second terminal ; et
un module de diffusion (1202), configuré pour diffuser la trame WIFI pour permettre la configuration du second terminal conformément aux données de configuration acquises en analysant syntaxiquement la trame WIFI reçue au niveau du second terminal ;
**caractérisé en ce que** la trame WIFI est la trame de demande de sondage dans le protocole 802.11, et les données de configuration sont contenues dans le champ SSID de la trame de demande de sondage.

12. Dispositif selon la revendication 11, dans lequel le module de génération est configuré pour
générer la trame WIFI avant d'établir une connexion de communication avec le second terminal, et fournir les données de configuration dans un champ prédéfini de la trame WIFI.

13. Dispositif selon la revendication 12, dans lequel les données de configuration comprennent :
un SSID et un mot de passe de connexion ;
le module de génération comprend :
un premier sous-module d'acquisition (1301) de données de configuration, configuré pour acquérir des SSID et mots de passe de connexion de réseaux sauvegardés dans le premier terminal et choisir un SSID et un mot de passe de connexion d'un réseau pour la configuration ; et
un premier sous-module porteur (1302) de données de configuration, configuré pour générer la trame WIFI en écrivant le SSID et le mot de passe de connexion du réseau choisi dans le champ prédéfini de la trame WIFI de manière à permettre la connexion du second terminal avec le réseau choisi conformément aux données de configuration acquises en analysant syntaxiquement la trame WIFI.

14. Dispositif selon la revendication 12, dans lequel les données de configuration comprennent :
un SSID, un mot de passe de connexion, un numéro de canal et un mode de cryptage ;
le module de génération comprend :
un second sous-module d'acquisition (1401) de données de configuration, configuré pour recevoir un SSID, un mot de passe de connexion, un numéro de canal et un mode de cryptage entrés par un utilisateur ; et
un second sous-module porteur (1402) de données de configuration, configuré pour générer la trame WIFI en écrivant le SSID, le mot de passe de connexion, le numéro de canal et le mode de cryptage entrés par l'utilisateur dans le champ prédéfini de la trame WIFI, de manière à permettre au second terminal de créer un réseau sans fil conformément aux données de configuration acquises en analysant syntaxiquement la trame WIFI reçue au niveau du second terminal.

15. Dispositif d'exécution d'une configuration au niveau d'un second terminal en réponse à des données de configuration reçues depuis un premier terminal, comprenant :
un module d'interception (1601), configuré pour intercepter une trame WIFI envoyée par un premier terminal, la trame WIFI contenant des données de configuration pour la configuration du second terminal ;
un module d'analyse syntaxique (1602), configuré pour acquérir les données de configuration en analysant syntaxiquement la trame WIFI interceptée ;
un module de configuration (1603), configuré pour exécuter la configuration conformément aux données de configuration ;
**caractérisé en ce que** la trame WIFI est la trame de demande de sondage dans le protocole 802.11, et les données de configuration sont contenues dans le champ SSID de la trame de demande de sondage.

16. Programme informatique comprenant un moyen de code de programme informatique, qui, à son exécution sur un processeur, exécute un procédé selon l'une quelconque des revendications 1 à 10.
